(19) Europäisches Patentamt / European Patent Office / Office européen des brevets

(11) **EP 2 821 961 A1**

(12) **EUROPEAN PATENT APPLICATION**

(43) Date of publication:
07.01.2015 Bulletin 2015/02

(51) Int Cl.:
*G06T 5/00* $^{(2006.01)}$      *H04N 19/00* $^{(2014.01)}$

(21) Application number: 13305954.3

(22) Date of filing: 05.07.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventor: **Hepper, Dietmar**
**30419 Hannover (DE)**

(74) Representative: **Schmidt-Uhlig, Thomas**
**Deutsche Thomson OHG**
**European Patent Operations**
**Karl-Wiechert-Allee 74**
**30625 Hannover (DE)**

(54) **Method and apparatus for superimposing noise on an image sequence**

(57)      A method for superimposing noise on an image of a sequence of images and an apparatus (20) configured to perform this method are described. A noise profile is retrieved (10) from a data source via a data interface (22). A noise sample generator (24) then generates (12) a noise sample based on the retrieved noise profile. The generated noise sample is superimposed (13) on the image by an image processor (25).

Fig. 1

EP 2 821 961 A1

**Description**

**FIELD OF THE INVENTION**

The invention relates to a method and to an apparatus for superimposing noise on an image or images of an image sequence. More specifically, a method and an apparatus capable of superimposing noise, e.g. film grain noise, on image sequences in accordance with a chosen characteristic are described.

**BACKGROUND OF THE INVENTION**

One task in film or video production and processing is the removal and/or superimposition of film grain noise on an image sequence. A chemical film is made of color layers, e.g. one layer for a black-and-white film or three color layers for a color film. Each layer contains color particles or grains. If a film is scanned on a film scanner, the resulting digital signal contains film grain noise, which manifests as small-scale spatio-temporal noise artifacts caused by the film grain. While the cause is spatial, the visual appearance is both spatial and temporal.

Strong film grain typically reduces visual quality. Therefore, removal or reduction is desired for quality enhancement of scanned film. Where scanned film is source encoded for compression, film grain noise reduces the coding gain. Therefore, removal or reduction of film grain noise prior to encoding is an issue, combined with simulation and addition of film grain noise in the receiver. Finally, visual film grain appearance is sometimes wanted for non-film-originating video material, or a unified film grain noise level is sought for a sequence combined from various sources containing different film grain noise levels. Therefore, there is a requirement for film grain noise removal or reduction and/or superimposition, so-called film grain management.

There are restoration tools on the market that include basic versions of film grain management, i.e. film grain noise removal and film grain noise superimposition. For superimposition artificially generated grain is often used. However, there is a lack of determining, quantifying and describing properties of film grain noise that are essential for later film grain noise superimposition yielding a natural look and feel.

In this regard US 2002/0034337 discloses a method for analyzing the broadband noise content of a digital image. Regions of originally constant color in the image are automatically identified by analysis of the variance of pixel values. Regions deemed to be unrepresentative of the true noise content are automatically detected and discarded. The selected constant color regions are analyzed in order to generate a parametric or non-parametric model of the noise in the image. However, the document only deals with single images. In addition, only a rough $2 \times 2$ sub-band analysis of the noise is performed.

US 5,641,596 describes a method for extracting and storing statistics of the grain pattern of scanned film. The statistics are representative of local, spatial, and spectral properties of a photographic grain pattern of that type of film. The statistical results are stored and used smoothing the film grain noise or for reducing its effects.

Furthermore, in the European Patent Application EP13305722.4 the generation of noise profiles from real image sequences or scanned neutral grey film is described. How to make use of such profiles for noise superimposition has been left open.

**SUMMARY OF THE INVENTION**

It is an object of the invention to provide an enhanced solution for superimposing noise on an image of an image sequence.

According to one aspect of the invention, a method for superimposing noise on an image of a sequence of images comprises the steps of:

- retrieving a noise profile from a data source;
- generating a noise sample based on the retrieved noise profile; and
- superimposing the noise sample on the image.

Accordingly, an apparatus configured to superimpose noise on an image of a sequence of images comprises:

- a data interface configured to retrieve a noise profile from a data source;
- a noise sample generator configured to generate a noise sample based on the retrieved noise profile; and
- an image processor configured to superimpose the noise sample on the image.

Similarly, a computer readable storage medium has stored therein instructions enabling superimposing noise on an image of a sequence of images, which when executed by a computer, cause the computer to:

- retrieve a noise profile from a data source;
- generate a noise sample based on the retrieved noise profile; and
- superimpose the noise sample on the image.

The invention allows superimposing noise, e.g. film grain noise, on image sequences, providing a natural look and feel of the superimposed noise. The superimposition output image signal is obtained from a noise-free or noise-filtered input image signal by superimposing film grain noise according to a certain superimposition law or characteristic, e.g. by addition of a noise sample to the image. The superimposition characteristic is defined by a noise profile, which is retrieved from a data source, e.g. from a database, a network source, a storage medium, or any other source of data. Superimposition characteristics can be defined or tailored by the user as to achieve a look and feel considering a certain type of film of interest, or considering certain artistic requirements. Film grain noise samples, which are advantageously derived from real film, are added after multiplication with an overall noise strength factor and a film-specific signal-dependent superimposition characteristic. A set of characteristics is available that are adapted to and have been determined from certain types of films of interest. The characteristics may be stored in and read from associated "film grain control files". Preferably, also bandwidth characteristics of the film grain noise are included. The user operating a respective tool for efficient film grain superimposition for film grain management can make an easy choice from the available characteristics or film types.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

## BRIEF DESCRIPTION OF THE DRAWINGS

Fig. 1    schematically illustrates a method according to the invention for superimposing noise on an image or images of a sequence of images;

Fig. 2    depicts an apparatus configured to implement the method of Fig. 1; and

Fig. 3    depicts a graphical user interface used by a software tool implementing the method of Fig. 1.

## DETAILED DESCRIPTION OF A PREFERRED EMBODIMENT

In the following the invention shall be explained with reference to film grain noise as an example for noise in an image sequence. Of course, the invention is not limited to this type of noise. The invention can be used for superimposing any kind of noise or low-level signal component on a given image.

Generally speaking, film grain management includes two steps. The first step is noise removal from an image sequence, e.g. from an edited version made of different sequences, which potentially show different levels of film grain noise. Noise removal is advantageously achieved by spatial and/or temporal filtering. The second step is superimposing defined film grain noise of unique strength throughout the complete (edited) sequence in order to achieve a common look and feel for the complete material.

The film grain noise for superimposition may be derived from natural scanned film or may be generated artificially.

A first approach for film grain noise superimposition is to superimpose the film grain noise in the linear domain. The output image signal s is obtained from a noise-free or noise-filtered input image signal $g$ by superimposing film grain noise fgn according to:

$$s(x, y, t) = g(x, y, t) + v \cdot fgn(x, y, t). \tag{1}$$

x,y,t refer to the horizontal, vertical and temporal coordinates of a pixel, respectively (pel/line/frame index). $s$ may stand for the R, G, or B component - the same holding for $g$ and fgn.

The value of multiplier $v$ typically depends on the signal level $g$. In addition, a global multiplier w can also be applied:

$$s(x,y,t) = g(x,y,t) + v\big(g(x,y,t)\big) \cdot w \cdot fgn(x,y,t). \tag{2}$$

Prior to superimposition the available film grain noise samples $fgn(x,y,t)$ are preferably normalized to their standard deviation so that the multipliers $v$ and w always refer to 1:

$$fgn(x,y,t) = fgn(x,y,t)/\sigma_{fgn}. \tag{3}$$

The signal-dependent multiplier $v(g(x,y,t))$ as the superimposition characteristic is typically derived from a measured or intended signal-dependent standard deviation of the film grain noise:

$$v\big(g(x,y,t)\big) = \sigma_{fgn}\big(g(x,y,t)\big). \tag{4}$$

A second approach for film grain noise superimposition is to superimpose the film grain noise in the logarithmic domain. As a special case, superimposition can be done after conversion of the input image signal from the linear to a logarithmic domain, and with the log-to-linear conversion as a final step, e.g.:

$$s(x,y,t) = \exp\Big(\log\big(g(x,y,t)\big) + v \cdot fgn(x,y,t)\Big). \tag{5}$$

For small $fgn$ this can be shown to correspond to a linear superimposition in the linear domain.
As a further solution scanned natural film grain noise may be used. Film grain noise samples are obtained by printing neutral grey film and scanning it subsequently, yielding samples $s(x,y,t)$. Artifacts are removed electronically, and the (local) mean value $m$ of s is subtracted, thus yielding the film grain noise $fgn(x,y,t)$:

$$fgn(x,y,t) = s(x,y,t) - m. \tag{6}$$

As described in European Patent Application EP13305722.4, from measured characteristics $\sigma_{fgn}^2(g)$ of film grain noise power vs. signal level, for each of the colour components or channels R, G, B, the film grain noise superimposition characteristics are derived as a signal-dependent multiplier $v(g)$:

$$v(g) = \sigma_{fgn}(g) = \sqrt{\sigma_{fgn}^2(g)}. \tag{7}$$

For this purpose the frame difference (fd) variance as a function of s is analyzed (in static image regions) and the measured functions $\sigma_{fd}^2(s)$ are approximated by simple mathematical functions and halved to obtain $\sigma_{fgn}^2(g)$. A limited set of classes of mathematical functions with a limited number of free parameters is used, e.g. parabolae, exponential functions, etc.
For some sequences or films, approximation by a simple parabola is appropriate:

$$\sigma_{fd}^2 = \max(0, a \cdot s^2 + b \cdot s + c). \qquad (8)$$

For other sequences or films an approximation by a combination of an exponential and a linear term is appropriate:

$$\sigma_{fd}^2 = \left(\sigma_{fd,0}^2/c\right) \cdot (1 - \exp(-a \cdot s) - b \cdot s). \qquad (9)$$

The above approach can be somewhat altered and simplified, in terms of parameters, to:

$$\sigma_{fd}^2 = a \cdot (1 - s)\left(1 - \exp(-b \cdot s)\right). \qquad (10)$$

For yet other sequences or films, approximation by exponential functions is appropriate, rising for low s, falling for high s:

$$\sigma_{fd}^2 = a \cdot \left(1 - \exp(-b \cdot s)\right). \qquad (11)$$

A further solution is an approximation by straight lines, rising for low s, falling for high s:

$$\sigma_{fd}^2 = \min(a \cdot s + b, c \cdot s + d, e \cdot (1 - s) + f). \qquad (12)$$

Yet another solution is an approximation by a straight line with an exponential roll-off:

$$\sigma_{fd}^2 = a \cdot s \cdot \left(1 - \exp\left(-b(1 - s)\right)\right). \qquad (13)$$

Still a further possibility is an approximation by a parabola with an exponential roll-off:

$$\sigma_{fd}^2 = a \cdot (s^2 + b \cdot s) \cdot \left(1 - \exp\left(-c \cdot (1 - s)\right)\right). \qquad (14)$$

Still a further possibility is an approximation by a multiplication of exponential functions:

$$\sigma^2_{fd} = a \cdot \left(1 - \exp(-b \cdot s)\right) \cdot \left(\exp(-c \cdot s) + d\right). \tag{15}$$

The above characteristics of frame difference variance as functions of the RGB signal value first have to be converted into characteristics of film grain noise variance as functions of the RGB signal value. This is easily done by division by 2 as described above:

$$\sigma^2_{fgn} = \sigma^2_{fd}/2. \tag{16}$$

Then the derived characteristics of film grain noise variance as functions of the RGB signal value are converted into characteristics that control the superimposition of scanned or artificially generated film grain noise samples *n* onto image sequence samples s resulting in noisy samples *y*. This operation is performed by multiplication with the signal-dependent standard deviation of the film grain noise, requiring to compute the square root of the variance first:

$$y = s + w \cdot \sigma_{fgn}(s) \cdot n, \tag{17}$$

where n is supposed to be normalized to a variance of 1 so that the desired average $\sigma_{fgn}$ is obtained.

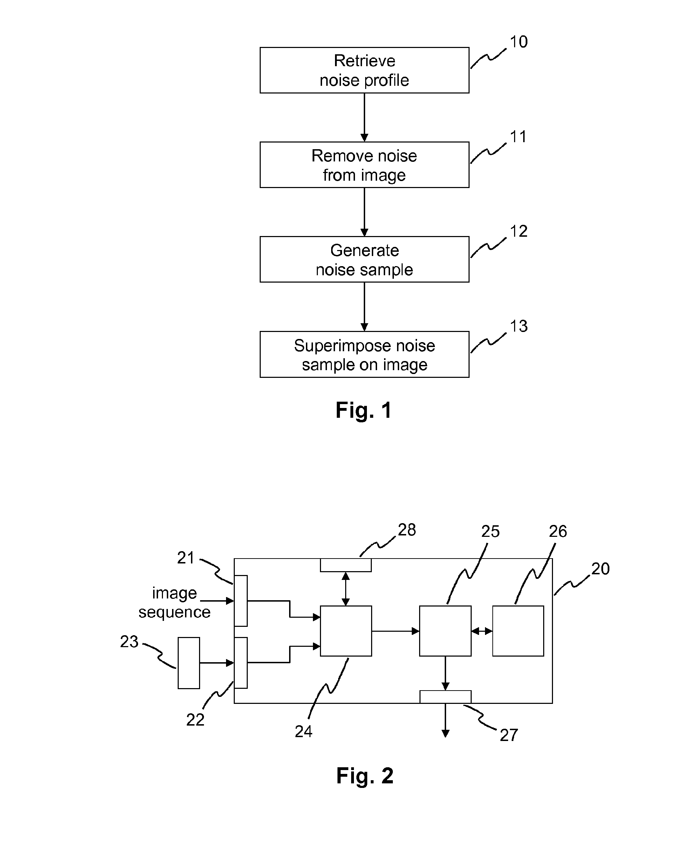

A method according to the invention for superimposing noise on an image of a sequence of images is schematically illustrated in Fig. 1. After retrieving 10 a noise profile from a data source, e.g. from a database, a network, or from a local storage, preferably noise that is already present in the image is filtered 11. Then a noise sample is generated 12 based on the retrieved noise profile. Finally, the generated noise sample is superimposed 13 on the image.

Fig. 2 depicts an apparatus 20 configured to implement the method of Fig. 1. The apparatus 20 has an input 21 for retrieving an image sequence, e.g. from a network or from a local storage. A data interface 22 allows retrieving 10 a noise profile from a data source 23. The data source 23 is either included in the apparatus 20 or external to the apparatus 20. A noise sample generator 24 generates 12 a noise sample based on the retrieved noise profile, which is then superimposed 13 on the image by an image processor 25. The resulting image is preferably stored in a storage unit 26 and/or provided to a network via an output 27. Advantageously, the apparatus 20 further has a user interface 28 enabling a user to interact with the different units of the apparatus 20, e.g. for modifying the generation of the noise sample. Of course, the input 21, the output 27, and/or the data interface 22 may be combined into a bi-directional communication interface. Also, the various units of the apparatus 20 may likewise be combined or partially combined into a single unit or implemented as software running on a processor.

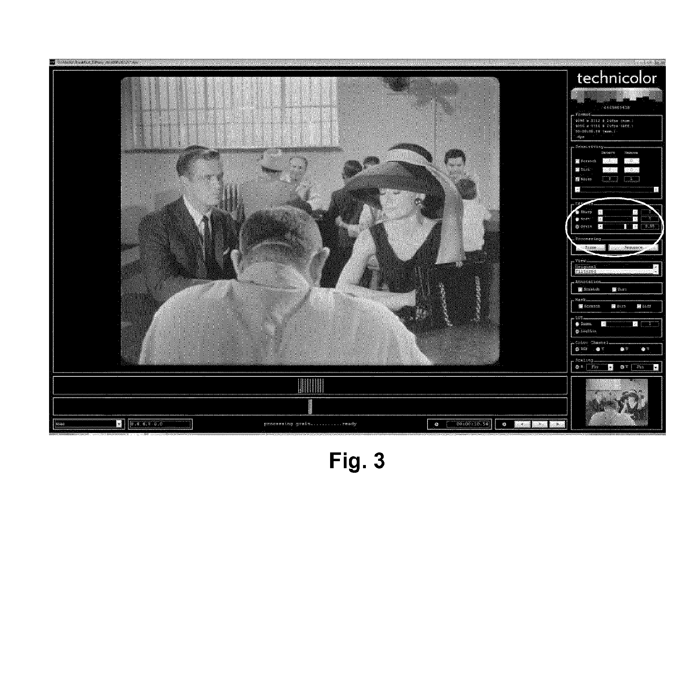

A sequence of grain samples is preferably generated by reading grain samples from a directory in accordance with or independent of the noise profile, or generated synthetically and tailored using parameters provided in the noise profile. The level of superimposed grain is controlled by the grain strength set in a GUI as shown in Fig. 3. The grain strength is preferably set using a slider or entering a number as shown in the right central part of the GUI highlighted by the white ellipse.

In general, the grain superimposition apparatus or software tool reads source images, reads or generates a grain image sequence, superimposes the grain on the source image, and outputs the resulting grainy images. Of course, the processing may involve a variety of other processing steps, such as:

Conversion of an input image (if needed)
Remove a gamma pre-correction if wanted
Convert dpx from log to lin if applicable
Convert to log intensity scale for superimposition
Conversion of grain input (if needed)
Convert bit depth to input image bit depth
Convert picture size to input image picture size, as these should be identical or at least similar
Conversion of image after superimposition to revert some of the above steps as required
Convert back from log to lin intensity scale.

The following measures are essentially useful for scanned film grain samples.

If the end of the grain sample sequence is reached before the source image sequence ends, superimposition starts again using the first grain frame. Identical grain is then periodically used for superimposition. Alternatively, the grain samples are selected from the grain sample sequence in a pseudo-random fashion.

The number of available grain samples is extended by a factor of 2 or 4 when the grain samples are also used in a horizontally and/or vertically mirrored version. The resulting grain sample sequence is preferably ordered, e.g. it begins with all original samples, continues with all samples mirrored horizontally, then all samples mirrored vertically, then all samples mirrored horizontally and vertically, or in any order. Again the selection of a grain sample from this extended set of grain samples can be done in a pseudo-random fashion.

If in case of scanned film grain noise samples *fgn* the local mean values $m_{fgn}$ have not yet been removed, i.e. a very-low-frequency component is still present, this is preferably done by the apparatus or software tool to yield "pure" film grain noise *n*:

$$n = fgn - m_{fgn}. \tag{18}$$

Anyway, the mean value determined over the complete film grain noise frame is subtracted individually for each color component, as the scanned film grain noise is usually found overlaid on a medium neutral grey image.

If the bit depth of source images and the grain samples is different, the grain is adapted accordingly. Likewise, if source images and grain samples differ in size, the grain samples are resized by interpolation to match the source image dimensions. Alternatively, the grain samples can be repeated spatially to fill the size of the source images.

Favorably, the noise samples are filtered, prior to superimposition, with a separable horizontal and/or vertical or inseparable 2-dimensional low-pass filter. This allows achieving a coarser grain size impression.

Superimposition advantageously takes place in the linear domain if scanned grain samples are provided, or in the logarithmic domain if grain is generated synthetically internally. In the latter case the grain energy is related to estimated noise energy.

The superimposition of scanned film grain noise is preferably controlled by parameters contained in a film grain superimposition control file (*.fgc), which is evaluated by the noise sample generator 24. If such a file is not available, default parameters are favorably used. Generally several control files are provided for different film grain noise look and feel, from which the user then makes a selection. Advantageously, the user has direct control over the following:

    scanned film grain noise samples to be provided to the noise sample generator 24,
    control file to be provided to the noise sample generator 24,
    amount of film grain noise controlled by the slider/number in the restoration GUI.

In case of superimposition in the linear domain, the following can be controlled via the control file:

$$y = s + fac \cdot \sigma_n(s) \cdot n. \tag{19}$$

The mode of operation is controlled by a mode control parameter, while *fac* is a factor set via the GUI's film grain noise slider controlling the overall noise level. The default preferably is *fac*=1. For all of the following examples, different parameter values or even characteristics can be selected for the different color components, e.g. RGB or YUV.

In case of a constant characteristic, the zero-mean film grain noise *n* is added to the source image signal *s*:

$$\sigma_n^2 = a = \text{const}. \tag{20}$$

In case of a linear characteristic, the film grain noise is added after multiplication with the source image signal in order to achieve higher film grain noise amplitudes in case of light image regions compared to dark regions:

$$\sigma_n^2 = a \cdot s.$$ $$(21)$$

In case of an exponential characteristic, multiplication is done with an exponential function of the source signal:

$$\sigma_n^2 = a \cdot \left(1 - \exp(-b \cdot s)\right).$$ $$(22)$$

In case of a parabola, multiplication is done according to a parabola function of the source signal:

$$\sigma_n^2 = a \cdot \max(0, s^2 + b \cdot s + c).$$ $$(23)$$

In case of an exponential and linear characteristic, multiplication is done according to a combination of an exponential and a linear term:

$$\sigma_n^2 = a \cdot (1 - s)\left(1 - \exp(-b \cdot s)\right).$$ $$(24)$$

In case of an exponential and mirrored characteristic, multiplication is done according to exponential functions, rising for low $s$, falling for high $s$ (a horizontally mirrored version of the former):

$$\sigma_n^2 = a \cdot \left(1 - \exp(-b \cdot s)\right).$$ $$(25)$$

In case of a characteristic represented by three linear sections, multiplication is done according to straight lines, rising for low $s$, falling for high $s$:

$$\sigma_n^2 = \min(a \cdot s + b; c \cdot s + d; e \cdot (1 - s) + f).$$ $$(26)$$

In case of a linear and exponential characteristic, multiplication is done according to a straight line with an exponential roll-off:

$$\sigma_n^2 = a \cdot s \cdot \left(1 - \exp(-b(1 - s))\right).$$ $$(27)$$

In case of a quadratic and exponential characteristic, multiplication is done according to a parabola with an exponential roll-off:

$$\sigma_n^2 = a \cdot (s^2 + b \cdot s) \cdot \left(1 - \exp\left(-c \cdot (1-s)\right)\right). \qquad (28)$$

In case of a characteristic according to the product of exponential functions, multiplication is done as to achieve an exponential rising and falling including a saturation:

$$\sigma_n^2 = a \cdot \left(1 - \exp(-b \cdot s)\right) \cdot \left(\exp(-c \cdot s) + d\right). \qquad (29)$$

By way of example, a film grain control file *.fgc contains the following entries:

- Version identifier
- Textual information about grain sample referring to (scanned/synthetic, etc.)
- Textual information about superimposition method
- Superimposition domain: lin or log; then for each of R, G, B:
- Superimposition characteristic in case of lin domain:

  o constant
  o linear
  o exponential
  o parabola
  o exponential and linear
  o exponential and mirrored
  o section-wise linear
  o linear and exponential
  o quadratic and exponential
  o exponential times exponential

- 2-6 parameters specifying the characteristic (referring to normalized intensity range 0...1, positive or negative)
- Bit depth originally referring to (informative)
- Overall multiplier a (e.g., 0.25; 1 = unmodified superimposition in constant case; 0 = scale to grain standard deviation; positive).

In case of superimposition in the logarithmic domain, the following is performed:

$$y = \exp\left(fac \cdot n + \log(s)\right). \qquad (30)$$

This can be shown to correspond to the above linear characteristic in the usual case of small $n$. If superimposition is done in the logarithmic domain and the input image follows a gamma law, the gamma is favorably reverted prior to grain superimposition and applied again afterwards.

Although the invention has been described hereinabove with reference to a specific embodiment, it is not limited to this embodiment and no doubt further alternatives will occur to the skilled person that lie within the scope of the invention as claimed.

**Claims**

1. A method for superimposing noise on an image of a sequence of images, the method **comprising** the steps of:

   - retrieving (10) a noise profile from a data source;

- generating (12) a noise sample based on the retrieved noise profile; and
- superimposing (13) the noise sample on the image.

2. The method according to claim 1, **wherein** the noise is film grain noise.

3. The method according to claim 1 or 2, **wherein** the noise sample is individually generated (11) for different image channels.

4. The method according to claim 3, **wherein** the image channels are RGB or YUV channels.

5. The method according to one of the preceding claims, **wherein** the noise sample is dependent on the signal levels of the image.

6. The method according to one of the preceding claims, **wherein** the noise profile specifies functions for calculating the noise sample.

7. The method according to one of the preceding claims, **further** comprising the step of filtering (11) noise in the image before superimposing (13) the noise sample on the image.

8. The method according to one of the preceding claims, **wherein** the noise sample is generated artificially or using scanned film images.

9. The method according to one of the preceding claims, **further** comprising the step of scaling the noise sample to at least one of the image size, the image bit depth, the image intensity scale, and other image signal format properties prior to superimposition.

10. The method according to one of the preceding claims, **wherein** the noise sample depends on the image signal levels in accordance with a linear, an exponential, a parabolic or another mathematical function of the image signal levels or a combination of such functions.

11. The method according to one of the preceding claims, **wherein** a number of different noise samples images are generated and/or stored and superimposed to achieve different noise impressions for different images.

12. The method according to one of the preceding claims, **wherein** the noise samples are multiplied with a strength factor prior to superimposition on the image.

13. The method according to one of the preceding claims, **wherein** the noise samples are filtered, prior to superimposition, with a separable horizontal and/or vertical or inseparable 2-dimensional low-pass filter.

14. An apparatus (20) configured to superimpose noise on an image of a sequence of images, the apparatus (20) **comprising:**

    - a data interface (22) configured to retrieve (10) a noise profile from a data source (23);
    - a noise sample generator (24) configured to generate (12) a noise sample based on the retrieved noise profile; and
    - an image processor (25) configured to superimpose (13) the noise sample on the image.

15. A computer readable storage medium having stored therein instructions enabling superimposing noise on an image of a sequence of images, which when executed by a computer, cause the computer to:

    - retrieve (10) a noise profile from a data source;
    - generate (12) a noise sample based on the retrieved noise profile; and
    - superimpose (13) the noise sample on the image.

Fig. 1

Fig. 2

Fig. 3

Europäisches
Patentamt

European
Patent Office

Office européen
des brevets

**EUROPEAN SEARCH REPORT**

Application Number

EP 13 30 5954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/105250 A2 (THOMSON LICENSING SA [FR]; GOMILA CRISTINA [US]; KOBILANSKY ALEXANDER) 2 December 2004 (2004-12-02) * abstract; figures 1-3 * * page 3, line 13 - line 32 * * page 4, line 7 - page 14, line 8 * ----- | 1-15 | INV. G06T5/00 H04N7/26 |
| X | US 2006/082649 A1 (GOMILA CRISTINA [US] ET AL) 20 April 2006 (2006-04-20) * abstract; figures 1-4 * * paragraph [0015] - paragraph [0056] * ----- | 1-15 | |
| X | CHRISTINA GOMILA ET AL: "SEI message for film grain encoding", JOINT VIDEO TEAM (JVT) OF ISO/IEC MPEG & ITU-T VCEG(ISO/IEC JTC1/SC29/WG11 AND ITU-T SG16 Q6), XX, XX, 23 May 2003 (2003-05-23), pages 1-14, XP002308742, * the whole document * ----- | 1-15 | |
| A | BYUNG TAE OH ET AL: "Advanced Film Grain Noise Extraction and Synthesis for High-Definition Video Coding", IEEE TRANSACTIONS ON CIRCUITS AND SYSTEMS FOR VIDEO TECHNOLOGY, IEEE SERVICE CENTER, PISCATAWAY, NJ, US, vol. 19, no. 12, December 2009 (2009-12), pages 1717-1729, XP011281921, ISSN: 1051-8215, DOI: 10.1109/TCSVT.2009.2026974 * the whole document * ----- | 1-15 | TECHNICAL FIELDS SEARCHED (IPC) G06T H04N |
| A | EP 1 511 320 A1 (MATSUSHITA ELECTRIC IND CO LTD [JP]) 2 March 2005 (2005-03-02) * the whole document * ----- -/-- | 1-15 | |

The present search report has been drawn up for all claims

| Place of search | Date of completion of the search | Examiner |
|---|---|---|
| Munich | 5 December 2013 | Herter, Jochen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 13 30 5954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | COLLIS B ET AL: "Synthesising film grain", 1ST EUROPEAN CONFERENCE ON VISUAL MEDIA PRODUCTION, IEE, GB, January 2004 (2004-01), pages 231-234, XP008102092, ISBN: 978-0-86341-391-9 * the whole document * | 1-15 | |

TECHNICAL FIELDS
SEARCHED       (IPC)

The present search report has been drawn up for all claims

| Place of search | Date of completion of the search | Examiner |
|---|---|---|
| Munich | 5 December 2013 | Herter, Jochen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 13 30 5954

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2013

| Patent document cited in search report | | Publication date | Patent family member(s) | | Publication date |
|---|---|---|---|---|---|
| WO 2004105250 | A2 | 02-12-2004 | AU | 2004240456 A1 | 02-12-2004 |
| | | | AU | 2004241535 A1 | 02-12-2004 |
| | | | AU | 2010202031 A1 | 10-06-2010 |
| | | | BR | PI0410320 A | 23-05-2006 |
| | | | BR | PI0410383 A | 04-07-2006 |
| | | | CA | 2525937 A1 | 02-12-2004 |
| | | | CA | 2526016 A1 | 02-12-2004 |
| | | | CN | 1788281 A | 14-06-2006 |
| | | | CN | 1791891 A | 21-06-2006 |
| | | | CN | 101350891 A | 21-01-2009 |
| | | | EP | 1627359 A2 | 22-02-2006 |
| | | | EP | 1627360 A1 | 22-02-2006 |
| | | | HK | 1087232 A1 | 10-10-2008 |
| | | | JP | 4919804 B2 | 18-04-2012 |
| | | | JP | 4960703 B2 | 27-06-2012 |
| | | | JP | 2007514336 A | 31-05-2007 |
| | | | JP | 2007515846 A | 14-06-2007 |
| | | | JP | 2010206808 A | 16-09-2010 |
| | | | JP | 2011071998 A | 07-04-2011 |
| | | | JP | 2012124952 A | 28-06-2012 |
| | | | KR | 20050121757 A | 27-12-2005 |
| | | | KR | 20060015725 A | 20-02-2006 |
| | | | MX | PA05012294 A | 31-05-2006 |
| | | | MX | PA05012295 A | 31-05-2006 |
| | | | MY | 145597 A | 29-02-2012 |
| | | | RU | 2377652 C2 | 27-12-2009 |
| | | | RU | 2010102017 A | 27-07-2011 |
| | | | US | 2006256873 A1 | 16-11-2006 |
| | | | WO | 2004104931 A1 | 02-12-2004 |
| | | | WO | 2004105250 A2 | 02-12-2004 |
| | | | ZA | 200509227 A | 30-05-2007 |
| | | | ZA | 200509231 A | 28-11-2007 |
| US 2006082649 | A1 | 20-04-2006 | BR | PI0516614 A | 16-09-2008 |
| | | | CA | 2583156 A1 | 27-04-2006 |
| | | | CN | 101044510 A | 26-09-2007 |
| | | | EP | 1803094 A1 | 04-07-2007 |
| | | | HK | 1104365 A1 | 05-10-2012 |
| | | | JP | 4696121 B2 | 08-06-2011 |
| | | | JP | 2008517530 A | 22-05-2008 |
| | | | KR | 20070067225 A | 27-06-2007 |
| | | | RU | 2378697 C2 | 10-01-2010 |
| | | | US | 2006082649 A1 | 20-04-2006 |
| | | | US | 2010080455 A1 | 01-04-2010 |
| | | | WO | 2006044260 A1 | 27-04-2006 |
| | | | ZA | 200703153 A | 27-08-2008 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 13 30 5954

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2013

| Patent document cited in search report | Publication date | Patent family member(s) | Publication date |
|---|---|---|---|
| EP 1511320 A1 | 02-03-2005 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20020034337 A
- US 5641596 A
- EP 13305722 A